Europäisches Patentamt

(19) European Patent Office

Office européen des brevets

(11) Publication number: **0 064 576**
**B1**

(12) **EUROPEAN PATENT SPECIFICATION**

(45) Date of publication of patent specification: **06.11.85**

(21) Application number: **81302003.9**

(22) Date of filing: **07.05.81**

(51) Int. Cl.⁴: **F 16 H 7/02, F 16 H 55/16, F 16 G 1/28, F 16 G 5/20, B 29 D 29/08**

(54) **Positive drive power transmission system, belts and pulleys therefor, and method of making such belts.**

(43) Date of publication of application:
**17.11.82 Bulletin 82/46**

(45) Publication of the grant of the patent:
**06.11.85 Bulletin 85/45**

(84) Designated Contracting States:
**DE FR GB IT**

(56) References cited:
**DE-A-2 115 843**
**DE-A-2 333 006**
**DE-A-3 009 468**
**FR-A-1 210 936**
**GB-A- 14 849**
**GB-A-1 143 269**
**GB-A-1 497 422**
**GB-A-1 570 714**
**US-A-1 959 972**
**US-A-3 404 576**
**US-A-3 464 875**
**US-A-4 037 485**
**US-A-4 066 732**

(73) Proprietor: **UNIROYAL, INC.**
**1230 Avenue of the Americas Rockefeller Center**
**New York, New York 10020 (US)**

(72) Inventor: **Kohrn, Robert Charles**
**68 North Humiston Bethany**
**New Haven Connecticut 06525 (US)**

(74) Representative: **Geldard, David Guthrie et al**
**URQUHART-DYKES AND LORD 11th Floor,**
**Tower House Merrion Way**
**Leeds, LS2 8PB West Yorkshire (GB)**

Courier Press, Leamington Spa, England.

## Description

This invention relates to positive drive power transmission systems composed of toothed belts in combination with toothed pulleys and to methods for making such toothed belts.

US—A—2507852 describes in detail a power transmission belt comprising an inextensible tensile member having teeth bonded to it on one side. A protective jacket fabric covers the teeth. The teeth are made of an elastomeric material, such as rubber. The belt is designed to mesh with one or more toothed pulleys that are constructed of material having a higher Young's modulus than the elastomeric material of the belt teeth.

Such toothed belts have been constructed with teeth of various cross-sectional configurations. The tooth cross-sectional configuration shown in US—A—2507852 is trapezoidal, similar to that of a conventional rack gear tooth. US—A—3756091 describes in detail a similar power transmission belt where the tooth cross-sectional configuration is substantially curvilinear being partially composed of two intersecting arcs. Different tooth cross-sectional configurations have been described in patents such as US—A—3924481, US—A—4037485, US—A—4066732, and US—A—4108011 and in the literature. Toothed power transmission belts having cross-sectional configurations as described in US—A—2507852 and US—A—3756091, as well as belts having teeth of other configurations, are used throughout industry.

In any such positive drive power transmission system the belt and pulleys forcefully engage or collide with each other when they mesh. A noise results from this impact contact.

The characteristic sound of such a positive drive power transmission system in operation is a loud "whine". The whine is comprised primarily of the meshing frequency of the system i.e. the frequency of collisions or impact contacts between the toothed belt and its pulleys and the integer harmonics of the meshing frequency. The meshing frequency is calculated by multiplying the number of grooves in the pulley by the pulley's speed of rotation. For example, a belt running on a 30-groove pulley turning at 40 revolutions per second would generate a noise composed of a 1200 Hz fundamental frequency and its integer harmonics, i.e. 2400 Hz, 3600 Hz, etc. When positive drive power transmission systems are operated under conditions of high horsepower, torque, and speed, noise levels in excess of 80dB normally result. It is not uncommon for noise to be generated in excess of 90dB.

Investigations of the effects of noise on hearing have shown that exposure to sound levels equal of greater than 85dB for lengthy periods of the time may result in permanent hearing loss. Thus various government regulations have been promulgated controlling exposure to high noise levels. As a result of such regulation and as a safety precaution, it is becoming common in industry to limit the durations of time a worker can be exposed to high noise levels and to require the wearing of ear protective devices.

Limitations related to noise have prevented the widespread use of toothed belt drives in certain industries. For example, the textile industry utilizes yarn twisting machines which are driven by V-belts. The energy required to operate them could be reduced substantially if toothed belts could be substituted for V-belts. However, the drive conditions and background noise levels are such that added noise due to positive drive power transmission systems could not be tolerated.

Toothed belt drive systems have been designed with the objective, among others, of reducing noise. Thus, GB—A—1570714 discloses a system wherein the belt-teeth are formed with a stress-relieving portion said to reduce noise as a secondary objective. DE—A—2333006 shows a combination toothed belt and V-belt, showing how the teeth may be formed with V-shaped depressions.

However, neither document shows how to modify the belt or pulleys in a positive drive power transmission system to significantly reduce the noise levels in those cases where the impact contact between the belt and pulleys produces unacceptably high noise levels. Noise could only be reduced by surrounding the entire positive drive power transmissions system with an acoustic guard or enclosure. The use of an acoustic guard or enclosure is not only costly, but adds to the problems of maintenance, and trapped heat within the enclosure, and to the bulk of the machine. The present invention seeks to provide an improvement in toothed belt and pulley positive drive power transmission systems which cause such systems to generate less noise during operation.

According to a first feature of the invention we provide a positive drive power transmission system comprising a belt having a tensile member with a plurality of elastomer teeth secured to at least one side of the tensile member and extending along the tensile member, each tooth having a flank portion and a tip portion, said flank portion of one tooth being spaced from the next consecutive flank portion of a next consecutive belt tooth by a belt land area, each of said flank portions including a first working surface area, and at least one toothed pulley having a plurality of pulley teeth which mesh with the belt teeth, with each pulley tooth having a second working surface area which makes impact contact with the first working surface area of the respective belt teeth when the belt and pulley are in meshing engagement, the belt and pulley generating an operating noise level at a given meshing frequency characteristic of the impact contact between the first and second working surface areas of the belt and the pulley; characterised in that a plurality of projections of predetermined size and shape are formed on said first working surface areas in order to modify impact contacts between first and second working surface areas by promoting a cushioning effect at each area of impact contact and thereby reduce the operating noise level of said power transmission system at the given meshing frequency.

The invention also relates to a method of manufacturing a belt for use in such a system. CA—A—637926 shows a method of moulding a toothed positive drive transmission belt having teeth each having a flank portion and a tip portion, the next adjacent flank portions of next adjacent teeth being spaced apart by land areas, comprising the steps of: applying at least one layer of fabric around the circumference of a cylindrical mould having axially extending grooves therein to form belt tooth cavities; helically winding an inextensible member in a plurality of convolutions around the circumference of the mould over the fabric to form a load carrying member for the belt; applying a layer of mouldable elastomer over the member; and heating and applying pressure to the layer of elastomer to force the softened elastomer through the spaces between successive convolutions of the member and filling the belt tooth cavities by forcing the fabric into contact with the walls of the grooves and filling the space between the fabric and the member with the elastomer.

In accordance with the invention, in the aforesaid method, prior to application of the fabric, material is applied to the outer circumference of the mould to form discontinuities on the circumference, the discontinuities being such that the moulded belt will be formed with a plurality of projections of predetermined size and shape formed on at least one of the flank portions of each tooth of the belt.

The invention will be more fully understood, while further objects and advantages will become apparent, from the following detailed description of the embodiments of the invention illustrated in the accompanying drawings in which:—

Figure 1 is a side elevational view of a belt in engagement with two pulleys to form a toothed belt positive drive power transmission system;

Figure 2 is a partial perspective view of a known positive drive transmission belt wherein each tooth has a trapezoidal longitudinal cross-sectional contour;

Figure 3 is a partial perspective view of a known positive drive transmission belt wherein each tooth has a curvilinear longitudinal cross-sectional contour;

Figure 4 is a partial perspective view of a positive drive transmission belt of the type shown in Figure 3 for use in one embodiment of the system of the present invention;

Figure 5 is an enlarged cross-sectional view of the belt of Figure 4 taken along the line 5—5 of Figure 4;

Figure 6 is an elevational view of a trapezoidal toothed belt mould with the belt parts built up thereon in accordance with one embodiment of the method in accordance with the present invention in readiness for the moulding operation, but showing parts of the belt broken away to better illustrate the process of manufacture;

Figure 7 is a cross-sectional view of the mould assembly shown in Figure 6, taken on line 7—7 of Figure 6;

Figures 8 to 10 are partial cross-sectional views of the belt mould showing the build-up of the mould and belt parts prior to moulding in one embodiment of the method in accordance with the present invention;

Figures 11, 12 and 13 are partial cross-sectional views of a mould assembly and belt parts shown in Figures 8, 9 and 10 taken on lines 11—11, 12—12, 13—13 respectively, showing the steps in one embodiment of the method in accordance with the present invention;

Figure 14 is a partial perspective view of one embodiment of a belt just after removal from the belt mould of Figures 6—13;

Figures 15 and 16 are partial perspective views of further embodiments of a positive drive belt for use in a system according to the present invention;

Figure 17 is a partial perspective view of a toothed pulley usable in the system of the invention;

Figure 18 is a partial cross-sectional view of the pulley of Figure 17 taken along the line 19—19 of Figure 17: and

Figures 19 to 31 are graphs of the noise generated by various positive drive power transmission systems.

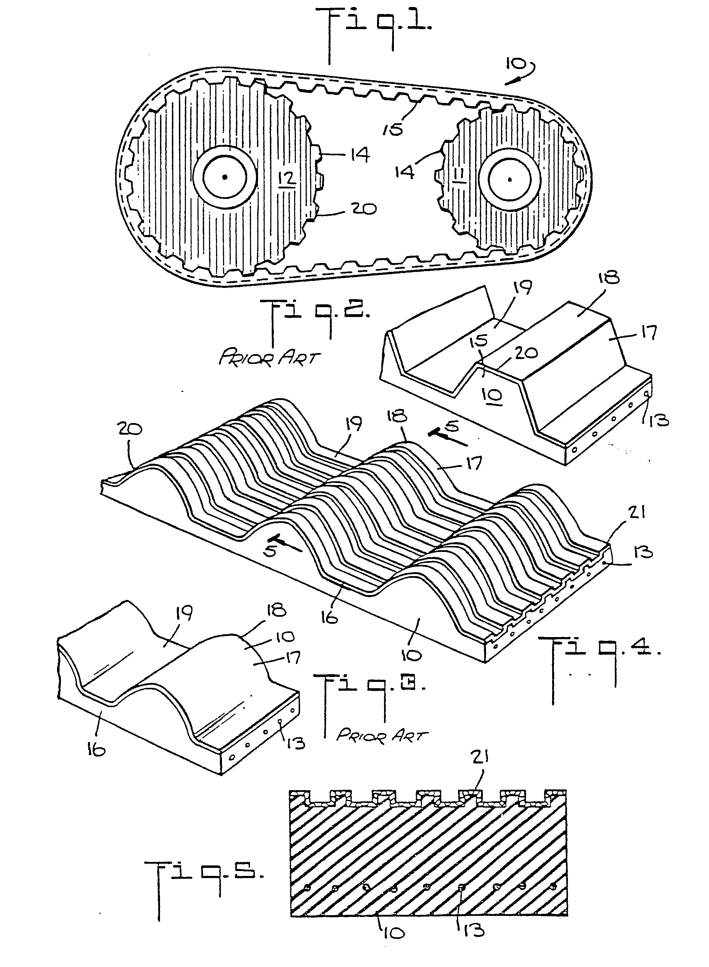

As seen in Figure 1, a positive drive power transmission system is shown composed of an endless toothed belt 10 and two toothed pulleys 11 and 12. The belt 10 transmits power from the driving pulley 11 to the driven pulley 12. The belt 10 is provided with a tensile member 13 formed from a plurality of turns of a continuous strand of filamentary material. The tensile member 13 carries substantially the entire working load imposed upon the belt 10.

The pulleys 11 and 12 have teeth 14 made of relatively rigid material, such as metal or hard plastic. The belt 10 has teeth 15 made of somewhat yieldable resilient elastomer or plastic material which is sufficiently firm to substantially maintain its shape under the load imposed on it.

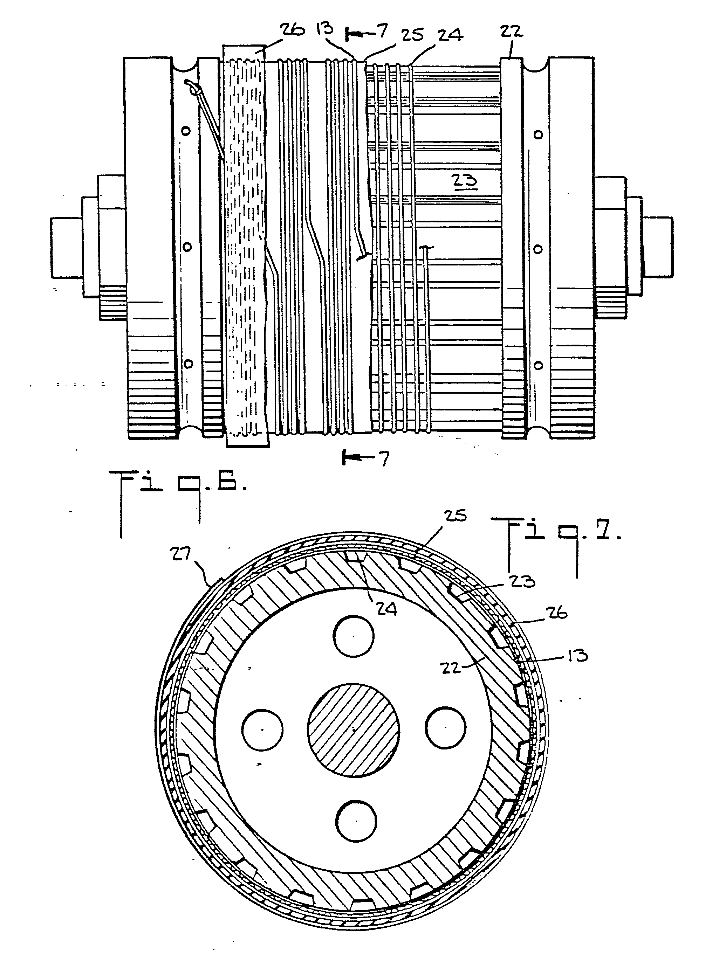

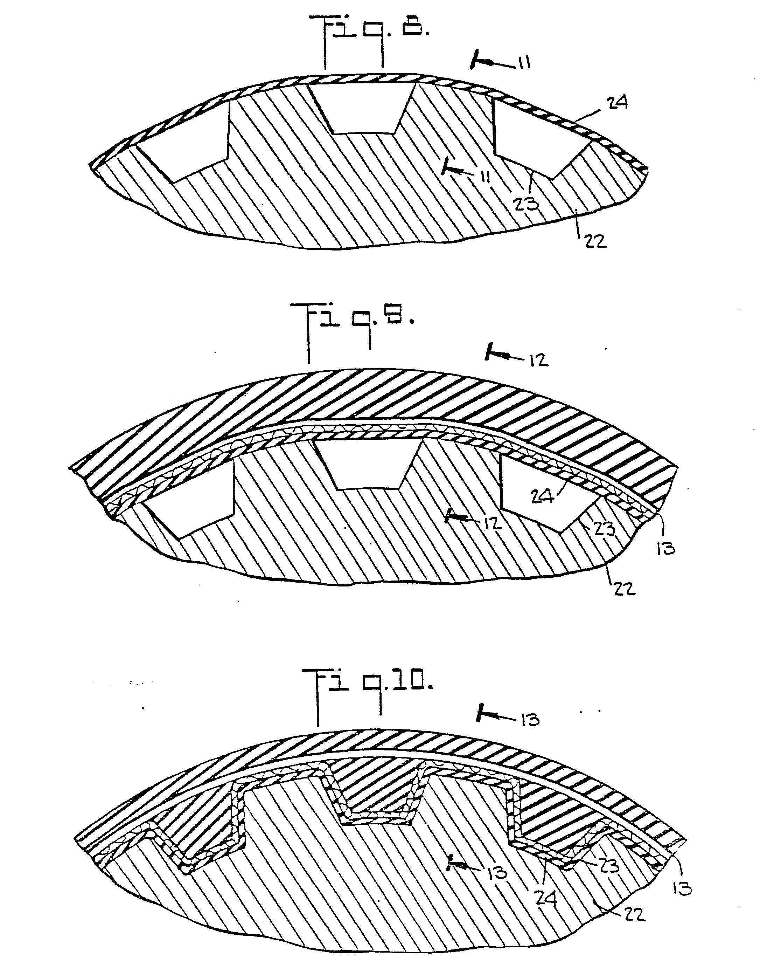

Figures 2 and 3 illustrate belts 10 having teeth with different cross-sectional configurations, i.e. trapezoidal and curvilinear, respectively. The belt shown in Figure 2 is of the type disclosed in US—A—2507852 and the belt shown in Figure 3 is of the type disclosed in US—A—3756091. Belts with these cross-sectional configurations, as well as belts with other cross-sectional configurations such as those previously described, are commonly used to form one of the components of positive drive power transmission systems. The belts 10 shown in Figures 2 and 3 have their teeth 15 on one side of the belt. Teeth may, however, be positioned on two or more sides of the belt 10. The teeth on different sides of the belt need not have the same cross-sectional configurations. US—A—2507852 and US—A—3756091 may be consulted for a more detailed description of their respective positive drive power transmission systems.

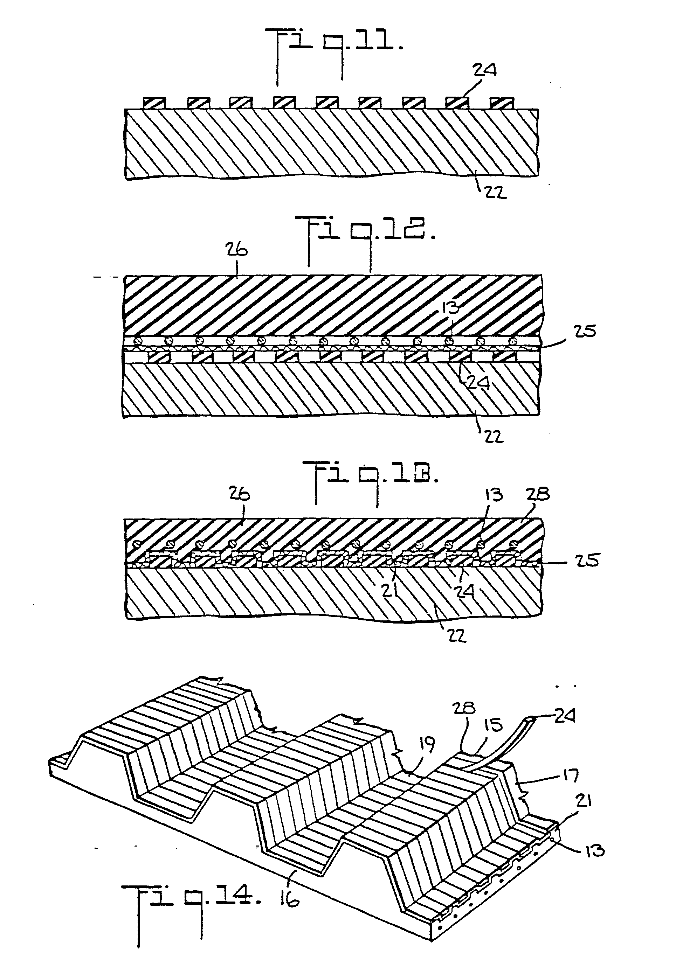

Figures 14, 16 and 17 disclose belts for use in the system of the present invention having teeth with trapezoidal cross-sectional configurations in accordance with US—A—2507852 and Figures 4, 5 and 15 disclose belts with teeth having curvilinear cross-sectional configurations in accordance with US—A—3756091. The present invention is equally applicable to these belts as well as belts having teeth with different cross-sectional configurations such as those disclosed in US—A—3924481, US—A—4037485, US—A—4066732 and US—A—4108011.

As seen most clearly in Figures 2 and 3, the positive drive belt 10 has teeth 15 bonded to the body 16 of the belt. The tensile member 13 is embedded in the body 16. The inner or working surface of the belt can be divided into three areas: teeth flanks 17, teeth tips 18 and land surfaces 19 between adjacent teeth 15. Each pulley 11 and 12 (Figure 18) is composed of a body portion 40 with teeth 14 formed thereon. The outer or working surface of the pulley 11 and 12 is composed of two areas: Pulley teeth tips 33 and the pulley cavities or grooves 34. The pulley cavities or grooves 34 may be considered to have flank portions and land portions separating the flank portions of adjacent teeth.

In operation, any toothed positive drive power transmission system produces a noise when working surfaces of the belt and pulleys collide or have impact contact with each other as they work. For any given system, the level of the noise depends on a number of parameters including tension, horsepower, torque and speed of operation. As previously noted, the sound is characteristically that of a whine comprised primarily of the meshing frequency and tis integer harmonics.

In operation, this characteristic sound can exceed acceptable industrial standards. With noise levels in excess of 90dB common, use of such systems in certain applications is either unacceptable or requires protective measures such as limiting durations of personnel exposure, or the use of ear protection devices or acoustic guards on the machinery.

In accordance with the present invention, dramatic noise reduction is achieved by the placing of projections on the working surface of the belt wherever noise generating impact contact takes place between the belt and the pulley. The projections act to modify the impact during meshing of the belt with the pulley. This effect sharply reduces the noise generated by such impact. Different belt and pulley designs and possible combinations of such designs have different areas of noise generating impact contact. Therefore, for ease of manufacture and to provide noise reduction for any belt and pulley combination the projections may extend completely over the working surface of the belt, or both belt and pulley.

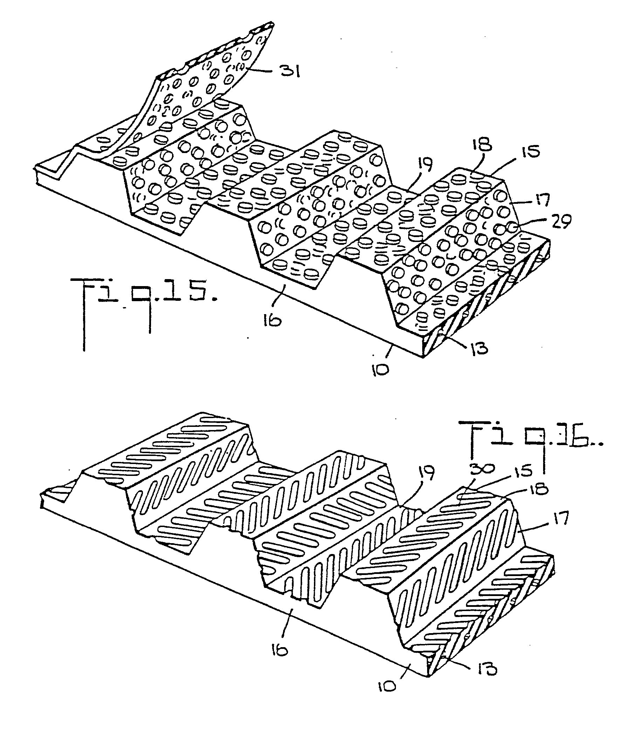

Figures 4, 5 show a belt 10 in accordance with the teachings of US—A—3756091 having the preferred embodiment of projections formed on its working surface. While the projections are shown on a belt having teeth with a curvilinear configuration, the invention works with the teeth of other cross-sectional configurations. The projections of this embodiment are in the form of longitudinal ridges 21 spaced transversely across the entire working surface of the belt 10, i.e. teeth flanks 17, teeth tips 18 and land surfaces 19. The ridges 21 extend parallel to each other in the longitudinal operating direction of the belt. As shown there are seven ridges 21. There may, however, be more or less than this number.

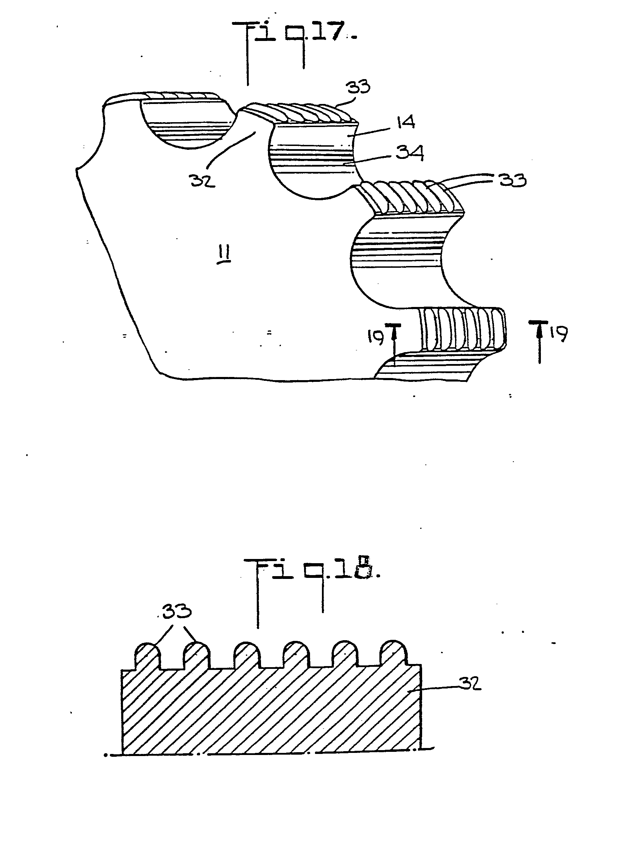

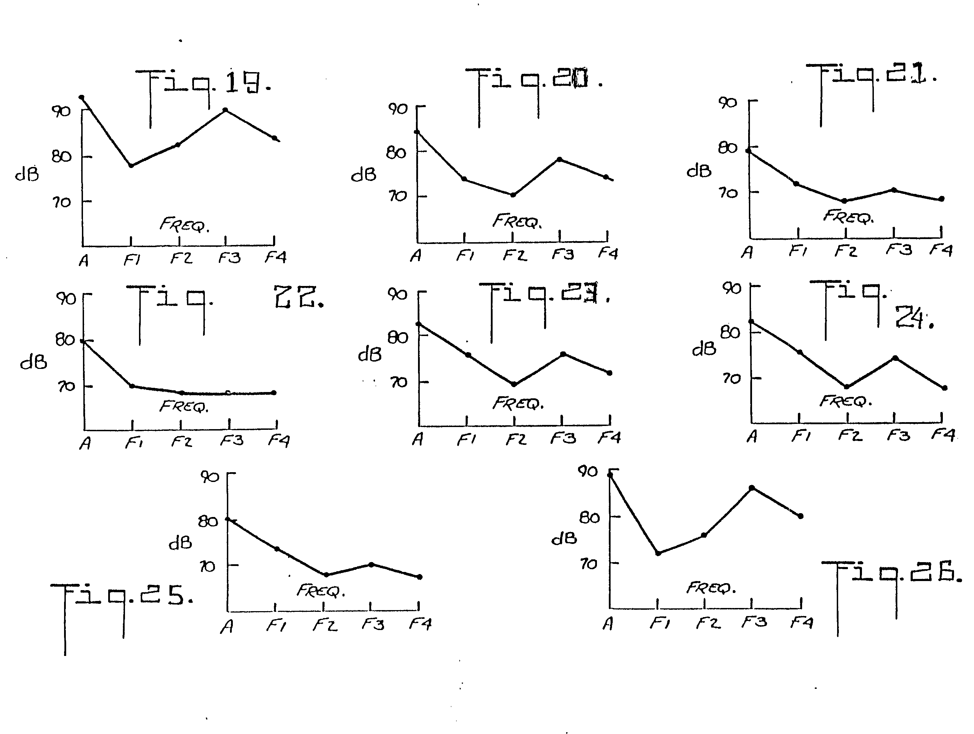

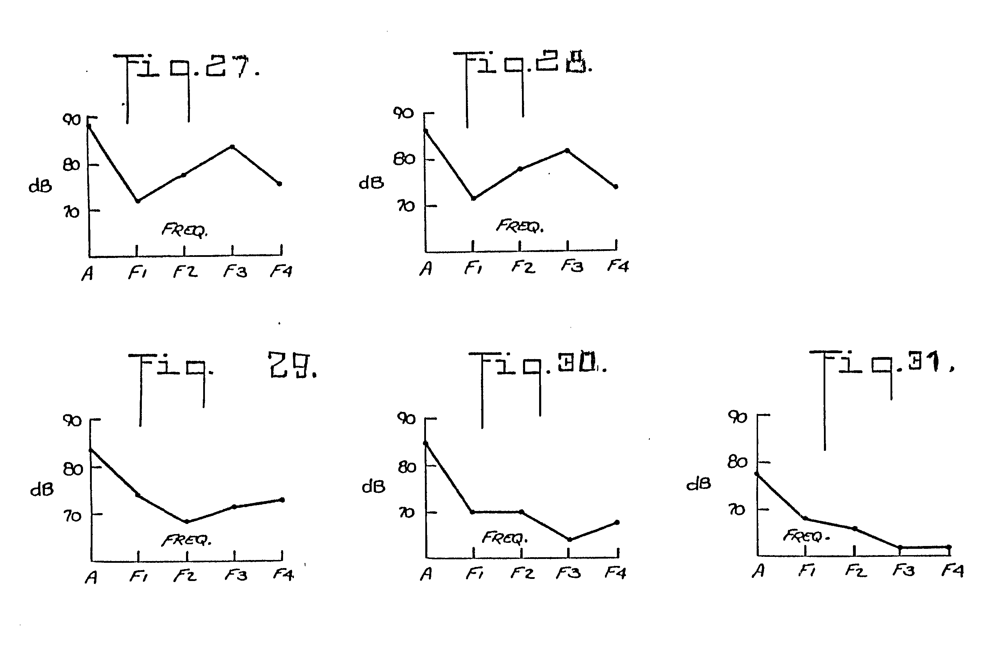

While this embodiment may be made in a number of ways, it is preferable to use an improvement of the method described in CA—A—637926. Figures 6 to 14 illustrate the method of forming ridges of one preferred embodiment of trapezoidal toothed belt. As in the method disclosed in CA—A—637962, the elements of the belt 10 are built upon a mould 22 having axially extending trapezoidal grooves 23 which grooves constitute moulds for the formation of the belt teeth 15. As seen in Figures 6, 7 and 8, prior to building the elements of the belt 10 on the mould 22, extensible thread 24 is spirally wound around the mould 22. The thread is made from a material, such as a cured rubber which is treated or selected so as not to bond to the belt 10 during its vulcanization. Instead of spirally winding thread, a series of spaced bands may be used. The cross-sectional configuration of the thread 24 may be square, rectangular, circular, trapezoidal or any other suitable configuration, as will become readily apparent hereafter. The dimensions of the thread cross-section will control the height, the shape of the flanks and the width of the space between the surface projections. The spacing of the thread winding will control the width of the surface projections.

If the belt is to have one or more jackets 20, one or more layers of stretchable fabric 25 is then applied around the mould 22 over the thread 24. The tensile member 13 is then spirally wound around the fabric 25. An elastomer layer 26 is positioned around the tensile member 13. A curing bag or wrap 27 for applying pressure to the belt parts 13, and 24—26 is positioned around the elastomer layer 26. The entire assembly is heated and pressure is applied to curing bag or wrap 27 to force the elastomer 26 between spaces in the tension member 13 as shown in Figures 9 and 10 to form and vulcanize the belt 10. See the Skura patent for details of the moulding and curing process.

As seen in Figures 11 to 14, during the moulding process the fabric 24 is forced by the elastomer 26 down and around thread 24, thereby acting to mould the surface projections 21 into the belt 10. When the resulting belt slab 28 is removed from the mould 22, the thread 24 is carried with it. Since the thread 24 does not adhere to the belt slab 28, it may be simply removed. Thereafter the belt slab 28 is cut into individual belts 10. Each such belt has ridges 21 running longitudinally along the working surface of the belt 10.

In an alternative method, the thread 24 may be substantially inextensible and frangible. The force and pressure exerted would then cause the portion of the thread between the raised ribs on the mould to break. Thus; the thread would result only in creating projections on portions of the belt teeth flanks 17 and the land surfaces 19.

As another alternative an inextensible thread may be applied over the surface of the grooved mould by use of adherents or by preforming the required contours in a rigid thread.

The use of either extensible or frangible thread, provides means for creating longitudinally extending projections without modifying the actual mould used in manufacturing the belt.

The selection of surface projection dimensions (length, width, height, and spacing) will be influenced by the size of the teeth of the belt as well as by the compressibility of the surface projections in relation to the loads to be encountered by the belt. Larger projections having dimensions such as 1.27 mm for height, width, and spacing, were found useful in large pitch belts such as 14 mm belts while smaller dimensions such as 0.76 mm were advantageous in smaller belts such as 1.27 mm pitch belts. Belt tooth sizes and pitches cover a wide range for applications from fractional horsepower to hundreds of horsepower. Experiments have shown that the most useful range of dimensions for the surface projections lies between 0.4 and 3.18 mm in height, spacing and width, with the projections covering between one quarter and three-quarters of the portion of the working surface containing the projections.

Figures 15 and 16 show alternate embodiments of belt 10 having surface projections. In these embodiments the projections are discontinuous across the surface of the belt and extend less than the distance between adjacent teeth. In Figure 15, a belt 10 has the projections 29 in the form of circular raised portions, shown as cylindrical. As noted previously alternative shapes, such as hemispherical protuberances, may be used. The raised portions may be in a random or uniform pattern but arranged such that one-quarter to three-quarters of the impact contact area is raised. The projections may be confined to the impact contact area or cover the entire working surface of the belt 10.

Figure 16 discloses a belt having teeth where the projections are on the entire working surface 17, 18 and 19 of the belt 10. The projections are a plurality of parallel, uniformly spaced ridges 30 placed in a "herringbone" or zig-zag pattern. The projections may be oriented at any angle to the tensile member, including perpendicular to the operating directions of the belt.

Figures 15 and 16 dislcose just some of the possible shapes of the projections, which may be positioned over the entire working surface of the belt or be confined to the impact contact area. Belts such as shown in these figures may be manufactured by the same method as that of the preferred embodiment except that instead of winding thread around the mould 22, a sheet 31 of cured extensible material with holes or cavities corresponding to the desired surface discontinuities is positioned on the mould. The material forming sheet 31 is selected or is treated so as not be bond to the belt 10 during its vulcanization. Such a sheet 31 is being shown removed from the belt of Figure 15 after vulcanization of the belt.

Alternatively, the sheet 31 may be formed from an inextensible frangible material which is positioned around the mould 22 but not in the mould grooves 23. The sheet 31 will break during moulding, creating projections on only a portion of the belt 10. As a further alternative an inextensible sheet may be positioned around the mould 22 and in grooves 23 by means of an adherent or by pre-shaping of the sheet 31 to the contours of the mould 22.

The mould 22 can be made with holes or cavities formed in its surface. This may require that the mould 22 be collapsible radially inwardly for belt slab removal. This latter method would however eliminate the need for use of a thread 24, or sheet 31.

In a still further embodiment of the method for making the belt 10 usable in the present invention the projections can be provided through the use of a jacket fabric 25 having projections formed therein. The jacket must be of such a tight weave, or precoated, to prevent rubber strike-through during the belt curing process. The surface of the jacket 25 which would face the mould would be of such a material as would not flatten out during the belt fabrication and curing process. The projections could be obtained by a pronounced weave in the jacket fabric 25, and by the application of a high-melting or non-thermoplastic material attached to the fabric by moulding or by other means. The fabric 25 may be extensible or inextensible depending on its method of application.

The belt 10 can be manufactured by methods other than that shown in CA—A—637926, such as by step cures in which belt materials are progressively advanced between flat moulding plates or by continuous moulding techniques where the belt elements are advanced between a heated grooved cylindrical mould and a pressure band. Using such systems, the projections can be formed directly in the mould surfaces. Finally a belt 10 in accordance with the present invention can be made by using substantially liquid elastomer introduced into a cavity between a mould and an external cylinder. The mould could be prepared with thread 24 or sheet 31 as previously discussed.

Figures 17 and 18 show a pulley 11 having projections on the pulley teeth tips 32 in the form of parallel serrations 33. The cross sectional configuration of the projections is shown as semicircular. Alternative cross-sectional contours can also produce noise reduction. The projections may be regularly or randomly spaced. They may be positioned at an angle to the pulley. If the area of impact contact between the belt and pulleys occurs in the pulley cavities or grooves 34, the projections should be located in this area. Alternatively the entire working surface, i.e. tooth tips 32 and cavities 34, could have projections thereon.

Figures 19 to 30 are graphs of test results showing noise produced by positive drive power transmission systems with and without belt projections. These and similar tests have shown that belt projections with dimensions between 0l4 and 3.18 mm in height, spacing, and width, which cover one-quarter to three-quarters of the working surface where impact contact takes place are effective in reducing noise. The larger dimensions are utilized in those belt pitches characterized by large teeth.

A precision sound level meter was used for noise tests. The decibel (dB) scale has been adopted internationally for use with sound level metering testing. The dB ratings are sometimes weighted to correspond with the subjective response of the ear. The weighted dB readings are known as dB(A).

For each test, the overall dB(A) value was recorded and is plotted on each graph above the notation "A". In addition, in each test a 1/3-octave spectrum analyzer was used to evaluate the unweighted values at the frequencies making up the sound produced by the belt and pulley. The spectrum analyzer divides the range of frequencies audible to humans into 30 bands, each designated by its centre frequency such as 2,000, 2,500, 3,125, 4,000 Hz, etc. If a sound has a particularly high component around 3,000 Hz, it will be indicated as a high reading of the 3,125 Hz centre-frequency band.

Figures 19 to 29 utilize jacketed 14 mm pitch belts with 100 curvilinear teeth having cross-sectional configurations in accordance with US—A—3 756 091. Each belt was 40 mm wide. The running condition was selected to produce a noise level such as encountered in normal operation of such positive drive power transmission systems. The tests were run at 1875 RPM using 32-groove pulleys to produce a meshing frequency of belt tooth with pulley groove of 1000 impact contacts per second.

This frequency is shown as $F_1$ on the horizontal axis of each graph, and $F_2$, $F_3$ and $F_4$ represent the integer harmonic centre-frequency values of 2000, 3125, and 4000 Hz. The lower noise levels observed at intermediate frequencies between $F_1$, $F_2$, $F_3$ and $F_4$ are omitted from the graphs for easier interpretation.

In the experiments represented by Figures 19 to 28 standard pulleys in accordance with US—A—3756 096 were used. In the experiments of Figure 29 pulleys 11 and 12 had surface projections.

In Figure 19 the results are shown of running the positive drive power transmission system without surface projections. The system had an overall noise reading of 93dB(A) and a range of 78 to 90 dB for the meshing frequency and its harmonics.

In Figures 20 to 28 surface projections of the type shown in the preferred embodiment (Figure 4) manufactured by the preferred method were used. Precured rubber threads of various sizes were wound on the mould surface at various turns-per-cm of application, the resulting ridges had specific dimensions of height, spacing between adjacent ridges, and width, so that the effect of such dimensions on noise could be demonstrated.

In Figures 20, 21 and 22 square cross-section cured rubber thread of approximately 1.42 mm thickness width was wound over the cylindrical mould at 15.24, 22.86 and 30.48 turns per cm resulting in belts having parallel ridges approximately 1.27 mm high and with widths of approximately 2.79 mm, 1.72 mm and 0.76 mm respectively. In all three cases the overall noise level was less than the 93 dB(A) of Figure 19, and the highest band reading was reduced below the 90dB observed at $F_3$ in Figure 19. Specifically the observed readings were, for Figure 20: 84 dB(A) and 78 dB at $F_3$, Figure 21: 79 dB(A) and 70 dB at $F_3$, Figure 22: 80 dB(A) and 68 dB at $F_3$. The belt of Figure 21 which showed the lowest noise level had 50 per cent of its area composed of the raised ridges. Figure 20 was 67 per cent raised and Figure 22 was 33 per cent raised.

For Figures 23, 24 and 25 smaller 1.07 mm square cross-section cured rubber thread was used at 20.32, 30.48 and 40.64 turns per cm, producing ridges having height and spacing of 1.02 mm, widths of 2.03 mm, 1.02 mm, and 0.51 mm and raised portions covering 67, 50, and 33 per cent of the area respectively. The noise levels were all lower than that using the plain belt of Figure 19 but not quite as effective as the ridges of Figure 21.

Figures 26, 27 and 28 utilized an even finer 0.84 mm square cross-section cured rubber thread applied at 20.32, 30.48 and 40.64 turns per cm to provide ridges having height and spacing of 0.76 mm and widths of 2.39 mm, 1.27 mm, and 0.76 cm and covering 73, 60 and 40 per cent of the area respectively. In all three cases noise level were reduced from those of the plain belt of Figure 19, but not to the extent experienced in Figure 21.

These and other tests indicate that noise reductions are greatest when the dimensions of height, spacing, and width of the ridges are between 0.4 mm and 3.18 mm and the ridges cover between one-quarter and three-quarters of the surface. These results indicate that even the smaller dimensioned surface ridges such as would of necessity have to be used on the smaller teeth of small pitch belts have the desired capability of reducing noise. For large pitches such as the 14 mm pitch belt the larger ridges as those of Figures 20—22 are particularly advantageous.

In the test of Figure 29 the test of Figure 19 was repeated except that the pulley had surface projections of the type shown in Figures 18 and 19. The height, width, and spacing from the next was 1.59 mm, and the top of each discontinuity was rounded to a radius of 0.79 mm. The belt also had surface discontinuities of 1.27 mm height and spacing with a width of 2.03 mm. The noise level was 84 dB(A) with 72 dB at $F_3$.

In the test of Figure 30, a standard 12.7 mm pitch trapezoidal tooth belt (as described in the Engineering Standard Specification for Drives Using Synchronous Belts, issued by the Rubber Manufacturers Association and the Mechanical Power Transmissions Association) tested with corresponding 22-groove pulleys at 1718 RPM (with a frequency of 630 Hz for $F_1$) produced 85 dB(A) and values of 70 dB for $F_1$ and $F_2$.

In the test of Figure 31 the test of Figure 30 was repeated with a similar belt having surface discontinuities of 1.22 mm height, width and spacing covering approximately fifty per cent of the surface. The noise level was reduced to 78 dB(A), and 68 and 66 dB for $F_1$ and $F_2$ respectively, thus indicating the effectiveness of the surface discontinuities in reducing the noise of the trapezoidal belt system.

As noted in the National Bureau of Standards Handbook No. 119, as a change of sound level of plus (or minus) 5 dB is quite noticeable and a change of sound level of plus (or minus) 10 dB is dramatic, nearly two times (or one-half) as loud. The graphical representations of the tests as shown in Figures 20 to 33 clearly indicate that the sound level reductions are "noticeable" and in many cases of "dramatic" magnitudes.

## Claims

1. A positive drive power transmission system comprising a belt (10) having a tensile member (13) with a plurality of elastomer teeth (15) secured to at least one side of the tensile member and extending along the tensile member, each tooth having a flank portion (17) and a tip portion (18) said flank portion of one tooth being spaced from the next consecutive flank portion of a next consecutive belt tooth by a belt land area (19), each of said flank portions (17) including a first working surface area; and at least one toothed pulley (11, 12) having a plurality of pulley teeth (14) which mesh with the belt teeth, with each pulley tooth having a second working surface area which makes impact contact with the first working surface area of the respective belt teeth when the belt and pulley are in meshing engagement, the belt and pulley generating an operating noise level at a given meshing frequency characteristic of the impact contact between the first and second working surface areas of the belt and the pulley; characterised in that a plurality of projections (21) of predetermined size and shape are formed on said first working surface areas in order to modify impact contacts between first and second working surface areas by promoting a cushioning effect at each area of impact contact and thereby reduce the operating noise level of said power transmission system at the given meshing frequency.

2. A system according to claim 1 characterised in that projections (21) are also located at the belt teeth tips (18) where the tips of the belt teeth come into impact contact with the pulley.

3. A system according to claim 1 or claim 2, characterised in that the belt teeth flanks (17) extend from the belt teeth tips (18) to said land areas (19), impact contact also takes place approximately at the junction of the belt land area with said belt flanks and there are projections (21) at said junction.

4. A system according to any one of the preceding claims characterised in that impact contact also takes place at or near the land area (19) of the belt and there are projections (21) at the belt land area.

5. A system according to any one of the preceding claims, characterised in that the projections (21) are continuous along the entire length of the belt (Figure 4).

6. A system according to any one of claims 1 to 4, characterised in that the projections (29 or 30) are discrete and discontinuous and are spaced over the working surface of the belt (Figure 15 or Figure 16).

7. A system according to any one of the preceding claims, characterised in that the projections (21) are distributed across substantially the width of the belt.

8. A system according to any one of the preceding claims, characterised in that the projections (29) are randomly spaced (Figure 15).

9. A system according to any one of claims 1 to 7 characterised in that the projections (21 or 30) are regularly spaced (Figure 4 or Figure 16).

10. A system in accordance with any one of the preceding claims characterised in that the projections (21) form from one-quarter to three-quarters of the working surface of the belt in the area of impact contact.

11. A system in accordance with any one of the preceding claims characterised in that the projections are in the form of raised ridges (21).

12. A system in accordance with any one of the preceding claims characterised in that the projections (21) have a height between 0.4 and 3.18 mm.

13. A system in accordance with any one of the preceding claims characterised in that the projections (21) have a width between 0.4 and 3.18 mm.

14. A system in accordance with any one of the preceding claims characterised in that the projections (21) are spaced from each other by between 0.4 and 3.18 mm.

15. A system in accordance with any one of the preceding claims characterised in that the projections (21) are formed of at least one material which also forms part of the remaining portions of the belt.

16. A system according to any one of the preceding claims characterised in that the belt includes a fabric cover (25) over said teeth, the surface of the fabric cover forms said working surface, and the fabric cover also covers the projections.

17. A system according to claim 1 characterised in that the pulley teeth (14) have tips and further projections (33) are located at the pulley teeth tips where the tips of the pulley teeth come into impact contact with the belt.

18. A method of moulding a toothed positive drive transmission belt for use in the system of claim 1, the belt (10) having teeth (15) each having a flank portion (17) and a tip portion (18), the next adjacent flank portions of next adjacent teeth being spaced apart by land areas (19), comprising the steps of: applying at least one layer of fabric (25) around the circumference of a cylindrical mould (22) having axially extending grooves (23) therein to form belt tooth cavities; helically winding an inextensible member (13) in a plurality of convolutions around the circumference of the mould over the fabric to form a load carrying member for the belt; applying a layer of mouldable elastomer (26) over the member; and heating and applying pressure to the layer of elastomer to force the softened elastomer through the spaces between successive convolutions of the member and filling the belt tooth cavities by forcing the fabric into contact with the walls of the grooves and filling the space between the fabric and the member with the elastomer; characterised in that prior to application of the fabric, material (24) is applied to the outer circumference of the mould to form discontinuities on the circumference, the discontinuities being such that the moulded belt will be formed with a plurality of projections (21) of predetermined size and shape formed on at least one of the flank portions of each tooth of the belt.

19. A method according to claim 18 characterised in that the material (24) does not bond to the belt (10) during moulding and is removed from the belt after removal of the belt from the mould so forming the discontinuities (21) on the belt surface.

20. A method according to claim 18 or claim 19 characterised in that the material (24) is a thread of material helically wound on to the mould.

21. A method according to claim 18 or claim 19 characterised in that the material (24) is a sheet of material, the sheet having surface discontinuities.

22. A method according to any one of claims 18 to 21 characterised in that the material (24) is substantially inextensible and frangible and breaks during moulding.

23. A method according to any one of claims 18 to 21 characterised in that the material (24) is extensible and during moulding is forced into contact with the walls of the mould grooves.

24. A method according to any one of claims 18 to 21 characterised in that the material (24) is substantially inextensible and is positioned over the surface of the mould grooves.

25. A method according to claim 18 characterised in that the material (24) is at least one layer of a stretchable impermeable fabric having a pronounced predetermined woven pattern and in that as the heated layer of elastomer is forced through the spaces between successive convolutions of the member to fill the belt tooth cavities it forces the stretchable fabric into contact with the walls of the groove and fills the space between the stretchable fabric and the member with the elastomer, the force being insufficient to allow the elastomer to penetrate through the fabric, the pronounced predetermined woven pattern thus forming surface discontinuities in the moulded toothed side of the belt.

26. A method according to claim 25 characterised in that the fabric has a partially cured elastomer layer on the surface of the fabric which prevents the mouldable elastomer from penetrating the fabric and filling the surface discontinuities of the pronounced predetermined woven pattern.

27. A method according to claim 25 characterised in that the pronounced predetermined pattern is formed in the weave of the fabric.

28. A method according to claim 25 characterised in that the pornounced predetermined pattern is formed from material moulded to the fabric.

**Revendications**

1. Transmission à courroie dentée comprenant une courroie (10) ayant un organe de traction (13) avec un certain nombre de dents en élastomère (15) fixées à au moins un côté de l'organe de traction et s'étendant le long de l'organe de traction, chaque dent ayant une partie de flanc (17) et une partie d'extrémité (18), ladite partie de flanc d'une dent étant espacée de la partie de flanc consécutive suivante d'une dent consécutive suivante de la courroie par une zone plate de la courroie (19), chacune desdites parties de flanc (17) comprenant une première surface de travail; et au moins une poulie dentée (11, 12) ayant un certain nombre de dents de poulie (14) qui viennent en prise avec les dents de la courroie, chaque dent de poulie ayant une seconde surface de travail qui produit un contact avec impact avec la première surface de travail des dents respectives de la courroie lorsque la courroie et la poulie sont en engagement d'engrènement, la courroie et la poulie produisant un niveau de bruit de fonctionnement à une fréquence d'engrènement connée caractéristique du contact avec impact entre les première et seconde surfaces de travail de la courroie et de la poulie caractérisée en ce qu'un certain nombre de protubérances (21) d'une dimension et d'une forme prédéterminées sont formées sur les premières surfaces de travail afin de modifier les contacts avec impact entre les première et seconde surfaces de travail en favorisant un effet d'amortissement à chaque surface du contact avec impact et de réduire ainsi le niveau du bruit de fonctionnement de la transmission à la fréquence d'engrènement donnée.

2. Transmission selon la revendication 1 caractérisée en ce que les protubérances (21) sont également placées sur les extrémités (18) des dents de la courroie où les extrémités des dents de la courroie viennent en contact avec impact avec la poulie.

3. Transmission selon la revendication 1 ou la revendication 2 caractérisée en ce que les flancs (17) des dents de la courroie s'étendent des extrémités (18) des dents de la courroie aux zones plates (19), un contact avec impact a également lieu environ à la jonction de la zone plate de la courroie avec les flancs de la courroie et il y a des protubérances (21) à ladite jonction.

4. Transmission selon l'une quelconque des revendications précédentes caractérisée en ce que le contact avec impact a également lieu sur ou près de la zone plate (19) de la courroie et il y a des protubérances (21) à la zone plate de la courroie.

5. Transmission selon l'une quelconque des revendications précédentes caractérisée en ce que les protubérances (21) sont continues sur toute la longueur de la courroie (figure 4).

6. Transmission selon l'une quelconque des revendications 1 à 4 caractérisée en ce que les protubérances (29 ou 30) sont distinctes et discontinues et sont espacées sur la surface de travail de la courroie (figure 15 ou figure 16).

7. Transmission selon l'une quelconque des revendications précédentes caractérisée en ce que les protubérances (21) sont distribuées sensiblement sur toute la largeur de la courroie.

8. Transmission selon l'une quelconque des revendications précédentes caractérisée en ce que les protubérances (29) sont espacées au hasard (figure 15).

9. Transmission selon l'une quelconque des revendications 1 à 7 caractérisée en ce que les protubérances (21 ou 30) sont régulièrement espacées (figure 4 ou figure 16).

10. Transmission selon l'une quelconque des revendications précédentes caractérisée en ce que les protubérances (21) forment de un-quart à trois-quarts de la surface de travail de la courroie dans la zone du contact avec impact.

11. Transmission selon l'une quelconque des revendications précédentes caractérisée en ce que les protubérances ont la forme de crêtes surélevées (21).

12. Transmission selon l'une quelconque des revendications précédentes caractérisée en ce que les protubérances (21) ont une hauteur comprise entre 0,4 et 3,18 mm.

13. Transmission selon l'une quelconque des revendications précédentes caractérisée en ce que les protubérances (21) ont une largeur comprise entre 0,4 et 3,18 mm.

14. Transmission selon l'une quelconque des revendications précédentes caractérisée en ce que les protubérances (21) sont espacées les unes des autres de 0,4 à 3,18 mm.

15. Transmission selon l'une quelconque des revendications précédentes caractérisée en ce que les protubérances (21) sont formées en au moins un matériau qui fait également partie des parties restantes de la courroie.

16. Transmission selon l'une quelconque des revendications précédentes caractérisée en ce que la courroie comprend un recouvrement d'étoffe (25) sur les dites dents, la surface du recouvrement d'étoffe forme ladite surface de travail et le recouvrement d'étoffe couvre également les protubérances.

17. Transmission selon la revendication 1 caractérisée en ce que les dents (14) de la poulie ont des extrémités et d'autres protubérances (33) sont placées aux extrémités des dents de la poulie où les extrémités des dents de la poulie viennent en contact d'impact avec la courroie.

18. Procédé de moulage d'une courroie dentée de transmission pour une utilisation dans le système de la revendication 1, la courroie (10) ayant des dents (15) chacune ayant une partie de flanc (17) et une partie d'extrémité (18), les parties suivantes adjacentes de flanc de dents adjacentes suivantes étant espacées par des zones plates (19), comprenant les étapes de: appliquer au moins une couche d'étoffe (25) sur la circonférence d'un moule cylindrique (22) ayant des gorges s'étendant axialement (23) pour former des cavités de dents de courroie; enrouler hélicoïdalement un organe inextensible (13) en un certain nombre de spires sur la circonférence du moule sur l'étoffe pour former un organe de support de la charge pour la courroie; appliquer une couche d'un élastomère moulable (26) sur l'organe; et chauffer et appliquer de la pression à la couche d'élastomère pour forcer l'élastomère ramolli à travers les espaces entre des spires successives de l'organe et remplir les cavités des dents de la courroie en forçant l'étoffe en contact avec les parois desgorges et en remplissant l'espace entre l'étoffe et l'organe par l'élastomère; caractérisé en ce qu'avant application de l'étoffe, un matériau (24) est appliqué à la circonférence externe du moule pour former des discontinuités sur la circonférence, les discontinuités étant telles que la courroie moulée soit formée avec un certain nombre de protubérances (21) d'une dimension et d'une forme prédéterminées formées sur au moins l'une des parties de flanc de chaque dent de la courroie.

19. Procédé selon la revendication 18 caractérisé en ce que le matériau (24) ne colle pas à la courroie (10) pendant le moulage et est retiré de la courroie après enlèvement de la courroie du moule pour ainsi former des discontinuités (21) à la surface de la courroie.

20. Procédé selon la revendication 18 ou la revendication 19 caractérisé en ce que le matériau (24) est un fil de matériau enroulé de manière hélicoïdale sur le moule.

21. Procédé selon la revendication 18 ou la revendication 19 caractérisé en ce que le matériau (24) est une feuille de matériau, la feuille ayant des discontinuités de surface.

22. Procédé selon l'une quelconque des revendications 18 à 21 caractérisé en ce que le matériau (24) est sensiblement inextensible et cassant et se rompt pendant le moulage.

23. Procédé selon l'une quelconque des revendications 18 à 21 caractérisé en ce que le matériau (24) est extensible et pendant le moulage, il est forcé en contact avec les parois des gorges du moule.

24. Procédé selon l'une quelconque des revendications 18 à 21 caractérisé en ce que la matériau (24) est sensiblement inextensible et est placé sur la surface des gorges du moule.

25. Procédé selon la revendication 18 caractérisé en ce que le matériau (24) est au moins une couche d'une étoffe imperméable extensible ayant un motif tissé prédéterminé prononcé et en ce que quand la couche chauffée d'élastomère est forcée à travers les espaces entre des spires successives de l'organe pour remplir les cavités des dents de la courroie, elle force l'étoffe extensible en contact avec les parois de la gorge et remplit l'espace entre l'étoffe extensible et l'organe par l'élastomère, la force étant insuffisante pour permettre à l'élastomère de traverser l'étoffe, le motif tissé prédéterminé prononcé formant ainsi des discontinuités de surface dans le côté denté moulé de la courroie.

26. Procédé selon la revendication 25 caractérisé en ce que l'étoffe a une couche d'élastomère partiellement durci à la surface de l'étoffe qui empêche l'élastomère moulable de pénétrer dans l'étoffe et de remplir les discontinuités de surface du motif tissé prédéterminé prononcé.

27. Procédé selon la revendication 25 caractérisé en ce que le motif pédéterminé prononcé est formé dans le tissage de l'étoffe.

28. Procédé selon la revendication 25 caractérisé en ce que le motif prédéterminé prononcé est formé d'un matériau moulé à l'étoffe.

**Patentansprüche**

1. Formschlüssige Antriebskraftübertragungsvorrichtung mit einem Riemen (10), der ein dehnbares Element (13) mit einer Vielzahl elastomerer Zähne (15) aufweist, die zumindest an einer Seite des dehnbaren Elements befestigt sind und sich längs des dehnbaren Elements erstrecken, wobei jeder Zahn einen Flankenabschnitt (17) und einen Stegabschnitt (18) aufweist, der Flankenabschnitt eines Zahns von dem nächstfolgenden Flankenabschnitt eines nächstfolgenden Riemenzahns durch eine Riemengrundfläche (19) getrennt ist und jeder Flankenabschnitt (17) eine erste Arbeitsfläche aufweist, und zumindest einer gezahnten Riemenscheibe (11, 12) mit einer Vielzahl Scheibenzähne (14), die mit den Riemenzähnen kämmen, wobei jeder Scheibenzahn eine zweite Arbeitsfläche aufweist, die in Stoßberührung mit der ersten Arbeitsfläche der zugeordneten Riemenzähne tritt, wenn der Riemen und die Riemenscheibe miteinander kämmen, wobei der Riemen und die Riemenscheibe bei einer vorgegebenen Eintrittsfrequenz einen Betriebsgeräuschpegel erzeugen, der der Stoßberührung zwischen den ersten und den zweiten Arbeitsflächen des Riemens und der Riemenscheibe entspricht, dadurch gekennzeichnet, daß eine Vielzahl Vorsprünge (21) vorgegebener Größe und Form auf den ersten Arbeitsflächen ausgebildet ist, um die Stoßberührungen zwischen den ersten und zweiten Arbeitsflächen durch Förderung eines Dämpfeffekts an jeder Stoßberührungsfläche zu verändern und dadurch bei einer vorgegebenen Eingriffsfrequenz den Betriebsgeräuschpegel der Kraftübertragungsvorrichtung zu senken.

2. Vorrichtung nach Anspruch 1, dadurch gekennzeichnet, das Vorsprünge (21) auch dort auf den Riemenzahnstegen Angeordnet sind, wo die Stege der Riemenzähne in Stoßberührung mit der Riemenscheibe kommen.

3. Vorrichtung nach Anspruch 1 oder 2, dadurch gekennzeichnet, daß die Riemenzahnflanken (17) von den Riemenzahnstegen (18) zu den Grundflächen (19) verlaufen, Stoßberührung auch ungefähr an den Übergangszonen zwischen der Riemengrundfläche zu den Riemenflanken stattfindet und Vorsprünge (21) an der Übergangszone angeordnet sind.

4. Vorrichtung nach einem der vorangehenden Ansprüche, dadurch gekennzeichnet, das Stoßberührung auch an oder nahe den Grundflächen (19) des Riemens stattfindet und Vorsprünge (21) auf der Riemengrundfläche angeordnet sind.

5. Vorrichtung nach einem der vorangehenden Ansprüche, dadurch gekennzeichnet, daß die Vorsprünge (21) über die gesamte Länge des Riemens kontinuierlich sind (Fig. 4).

6. Vorrichtung nach einem der Ansprüche 1 bis 4, dadurch gekennzeichnet, daß die Vorsprünge (29 oder 30) getrennt und diskontinuierlich sind und im Abstand voneinander über die Arbeitsfläche des Riemens verteilt sind (Fig. 15 oder Fig. 16).

7. Vorrichtung nach einem der vorangehenden Ansprüche, dadurch gekennzeichnet, daß die Vorsprünge (21) nahezu über die gesamte Weite des Riemens verteilt sind.

8. Vorrichtung nach einem der vorangehenden Ansprüche, dadurch gekennzeichnet, daß die Vorsprünge (29) zufällig beabstandet sind (Fig. 15).

9. Vorrichtung nach einem der Ansprüche 1 bis 7, dadurch gekennzeichnet, daß die Vorsprünge (21 oder 30) regelmäßig beabstandet sind (Fig. 4 oder Fig. 16).

10. Vorrichtung nach einem der vorangehenden Ansprüche, dadurch gekennzeichnet, daß die Vorsprünge (21) zwischen 1/4 und 3/4 der Arbeitsfläche des Riemens im Bereich der Stoßberührung bilden.

11. Vorrichtung nach einem der vorangehenden Ansprüche, dadurch gekennzeichnet, daß die Vorsprünge die Form erhöhter Rücken (21) aufweisen.

12. Vorrichtung nach einem der vorangehenden Ansprüche, dadurch gekennzeichnet, daß die Vorsprünge (21) eine Höhe zwischen 0,4 und 3,18 mm haben.

13. Vorrichtung nach einem der vorangehenden Ansprüche, dadurch gekennzeichnet, daß die Vorsprünge (21) eine Weite zwischen 0,4 und 3,18 mm haben.

14. Vorrichtung nach einem der vorangehenden Ansprüche, dadurch gekennzeichnet, daß die Vorsprünge (21) zueinander in einem Abstand zwischen 0,4 und 3,81 mm stehen.

15. Vorrichtung nach einem der vorangehenden Ansprüche, dadurch gekennzeichnet, daß die Vorsprünge (21) aus zumindest einem Werkstoff gebildet sind, der auch zur Bildung der übrigen Abschnitte des Riemens benutzt wird.

16. Vorrichtung nach einem der vorangehenden Ansprüche, dadurch gekennzeichnet, daß der Riemen eine über den Zähnen angeordnete Gewebeschicht aufweist, wobei die Oberfläche der Gewebeschicht die Arbeitsfläche bildet und die Gewebeschicht auch die Vorsprünge abdeckt.

17. Vorrichtung nach Anspruch 1, dadurch gekennzeichnet, daß die Scheibenzähne (14) Stege aufweisen und weitere Vorsprünge (33) auf den Scheibenzahnstegen angeordnet sind, wo die Stege der Scheibenzähne in Stoßberührung mit dem Riemen kommen.

18. Verfahren zur Formung eines gezahnten Formschlußkraftübertragungsriemens zur Benutzung in der Vorrichtung gemäß Patentanspruch 1, wobei der Riemen (10) Zähne (15) hat, die alle einen Flankenabschnitt (17) und einen Stegabschnitt (18) aufweisen, wobei die nächstbenachbarten Flankenabschnitte durch Grundflächen (19) im Abstand zu nächstbenachbarten Zähnen stehen, und wobei das Verfahren aus folgenden Stufen besteht: Aufbringen zumindest einer Schicht Gewebe (25) um den Außenmantel einer zylindrischen Form (22) mit axialverlaufenden Nuten (23), die die Riemenzahnhohlräume bilden, schraubenförmiges Aufwickeln eines nichtdehnbaren Elements (13) in einer Vielzahl Wicklungen um den Außenmantel der Form über dem Gewebe, um ein Kraftaufnahmeelement für den Riemen zu bilden, Aufgabe einer Schicht formbaren Elastomers (26) über das Element und Erwärmen und Druckbeaufschlagen der Elastomerschicht, um das erweichte Elastomer durch die Zwischenräume zwischen den aufeinander folgenden Wicklungen des Elements durchzudrücken, die Riemenzahnhohlräume durch Drücken des Gewebes in Anlage an die Wände der Nuten zu füllen und den Zwischenraum zwischen dem Gewebe und dem Element mit Elastomer zu füllen, dadurch gekennzeichnet, daß, bevor das Gewebe zugegeben wird, Werkstoff (24) auf den Außenmantel der Form aufgegeben wird, um Unregelmäßigkeiten auf dem Mantel zu bilden, wobei die Unregelmäßigkeiten derart beschaffen sind, daß der geformte Riemen mit einer Vielzahl Vorsprünge (21) vorgegebener Größe und Form gebildet wird, die zumindest auf einem der Flankenabschnitte jedes Riemenzahns ausgebildet sind.

19. Verfahren nach Anspruch 18, dadurch gekennzeichnet, daß der Werkstoff (24) sich während des Formungsvorgangs nicht mit dem Riemen (10) verbindet und nach dem Herausnehmen des Riemens aus der Form vom Riemen entfernt

wird, wodurch die Unregelmäßigkeiten (21) auf der Riemenoberfläche gebildet werden.

20. Verfahren nach Anspruch 18 oder 19, dadurch gekennzeichnet, daß der Werkstoff (24) eine Werkstoffwicklung ist, die schraubenförmig um die Form gewickelt ist.

21. Verfahren nach Anspruch 18 oder 19, dadurch gekennzeichnet, daß der Werkstoff (24) blattförmig ist, wobei das Blatt Oberflächenunregelmäßigkeiten aufweist.

22. Verfahren nach einem der Ansprüche 18 bis 21, dadurch gekennzeichnet, daß der Werkstoff (24) nahezu undehnbar und zerbrechlich ist und während des Formungsvorgangs bricht.

23. Verfahren nach einem der Ansprüche 18 bis 21, dadurch gekennzeichnet, daß der Werkstoff (24) undehnbar ist und während des Formungsvorgangs in Berührung mit den Wänden der Nuten der Form gedrückt wird.

24. Verfahren nach einem der Ansprüche 18 bis 21, dadurch gekennzeichnet, daß der Werkstoff (24) nahezu undehnbar und auf der Oberfläche der Nuten der Form angeordnet ist.

25. Verfahren nach Anspruch 18, dadurch gekennzeichnet, daß der Werkstoff (24) zumindest eine Schicht eines dehnbaren, nichtpermeablen Gewebes ist, die ein ausgebildetes, vorbestimmtes Einlagemuster aufweist, und daß, wenn die erwärmte Elastomerschicht durch die Abstände zwischen aufeinanderfolgenden Wicklungen des Elements gedrückt wird, um die Riemenzahnhohlräume zu füllen, des das dehnbar Gewebe in Berührung mit den Wänden der Nut drückt und den Zwischenraum zwischen dem dehnbaren Gewebe und dem Element mit dem Elastomer füllt, wobei die Kraft unzureichend ist, zum das Elastomer durch das Gewebe durchdringen zu lassen, wodurch das ausgebildete, vorgegebene Einlagemuster auf der geformten, gezahnten Seite des Riemens Oberflächenunregelmäßigkeiten bildet.

26. Verfahren nach Anspruch 25, dadurch gekennzeichnet, daß das Gewebe eine teilweise gehärtete elastomere Schicht auf der Oberfläche des Gewebes aufweist, die das formbare Elastomer daran hindert, das Gewebe zu durchdringen und die Oberflächenunregelmäßigkeiten des ausgebildeten, vorgegebenen Einlagemusters zu füllen.

27. Verfahren nach Anspruch 25, dadurch gekennzeichnet, daß das ausgebildete, vorgegebene Muster in der Struktur des Gewebes gebildet ist.

28. Verfahren nach Anspruch 25, dadurch gekennzeichnet, daß das ausgebildete, vorgegebene Muster durch einen Werkstoff gebildet wird, der an das Gewebe angeformt ist.

0 064 576

Fig.1.

Fig.2.

PRIOR ART

Fig.3.

PRIOR ART

Fig.4.

Fig.5.

1

Fig.6.

Fig.7.

0 064 576

Fig.8.

Fig.9.

Fig.10.

3

## Fig.11.

24

22

## Fig.12.

26

13

25

24

22

## Fig.13.

26

13   28

25

21   24

22

## Fig.14.

28   15   24

19

17

21

13

16

Fig.15.

31

18    15

19    17

29

16

13

10

Fig.16..

19    30    15

18

17

16

13

10

5

Fig.17.

11

Fig.18.

Fig.19.

Fig.20.

Fig.21.

Fig.22.

Fig.23.

Fig.24.

Fig.25.

Fig.26.

0 064 576

Fig.27.

Fig.28.

Fig.29.

Fig.30.

Fig.31.